# EUROPEAN PATENT APPLICATION

(11) **EP 4 726 843 A1**
(43) Date of publication of application: **15.04.2026**
(21) Application number: 23944960.6
(22) Date of filing: 21.12.2023
(51) Int. Cl.: H01M 10/058, H01M 10/0525, H01M 10/04

(54) **BATTERY PRESSURIZATION DEVICE AND BATTERY PRODUCTION SYSTEM**

(30) Priority: 13.07.2023 CN 202310859758
(71) Applicant: Contemporary Amperex Technology Co., Limited, Ningde, Fujian 352100 (CN)
(72) Inventor: HE, Zehong, Ningde, Fujian 352100 (CN); ZHAO, Fenggang, Ningde, Fujian 352100 (CN); YI, Zhuangcheng, Ningde, Fujian 352100 (CN); SHI, Qiming, Ningde, Fujian 352100 (CN); JING, Peng, Ningde, Fujian 352100 (CN); MA, Junliang, Ningde, Fujian 352100 (CN); ZHONG, Bin, Ningde, Fujian 352100 (CN); GUO, Erchi, Ningde, Fujian 352100 (CN); HUANG, Caixia, Ningde, Fujian 352100 (CN); TANG, Minghao, Ningde, Fujian 352100 (CN)
(74) Representative: Kraus & Lederer PartGmbB
(86) International application number: PCT/CN2023/140654
(87) International publication number: WO 2025/010955

(57) **Abstract**

The present application discloses a battery pressurization device and a battery production system. The battery pressurization device includes a bearing mechanism, a first pressurization plate, and a second pressurization plate. The first pressurization plate and the second pressurization plate are disposed on the bearing mechanism and are opposite to each other in a first direction. The first pressurization plate and the second pressurization plate can move towards each other in the first direction to apply pressure to a battery cell disposed between the first pressurization plate and the second pressurization plate from both sides.

## Description

### CROSS-REFERENCE TO RELATED APPLICATIONS

The present application claims priority to Chinese patent application No. 202310859758.X, filed on July 13, 2023 and entitled "BATTERY PRESSURIZATION DEVICE AND BATTERY PRODUCTION SYSTEM", the entire content of which is incorporated herein by reference.

### TECHNICAL FIELD

The present application relates to the field of batteries, and in particular, to a battery pressurization device and a battery production system.

### BACKGROUND

With the development of new-energy technologies, batteries are increasingly widely applied, such as applied in a mobile phone, a laptop, a storage battery car, an electric vehicle, an electric airplane, an electric ship, an electric toy car, an electric toy ship, an electric toy plane, an electric tool, and the like.

In some production processes of battery cells, it is necessary to pressurize the battery cells. Therefore, there is an urgent need to provide a device that can pressurize the battery cells.

### SUMMARY OF THE INVENTION

The present application provides a battery pressurization device and a battery production system, and the battery pressurization device can apply pressure to battery cells from both sides.

In a first aspect, embodiments of the present application provide a battery pressurization device, which includes a bearing mechanism, a first pressurization plate, and a second pressurization plate. The first pressurization plate and the second pressurization plate are disposed on the bearing mechanism and are opposite to each other in a first direction. The first pressurization plate and the second pressurization plate can move towards each other in the first direction to apply pressure to the battery cell disposed between the first pressurization plate and the second pressurization plate from both sides.

When it is necessary to pressurize the battery cells, the plurality of battery cells can be arranged between the first pressurization plate and the second pressurization plate. An external driving component can drive the first pressurization plate and the second pressurization plate to move towards each other in the first direction to reduce a distance between the first pressurization plate and the second pressurization plate, thereby allowing the first pressurization plate and the second pressurization plate to apply pressure to the battery cell from both sides, limiting the deformation of the battery cell, and improving the yield of the battery cell. By changing the displacement of the first pressurization plate and the second pressurization plate, the pressure applied to the battery cell by the first pressurization plate and the second pressurization plate can be effectively controlled, thereby achieving pressure controllability and reducing the risk of electrolyte overflow caused by excessive pressure.

In some embodiments, the battery pressurization device further includes a first limiting member, and the first limiting member is disposed on the bearing mechanism. The first limiting member is configured to limit movement of the first pressurization plate in a direction away from the second pressurization plate when the pressure applied to the battery cell by the first pressurization plate reaches a first threshold.

When the pressure applied to the battery cell by the first pressurization plate reaches the first threshold, the first limiting member can limit the first pressurization plate. At this time, even if the pressure applied to the first pressurization plate by the external driving component is removed, the first limiting member can still maintain the position of the first pressurization plate, which reduces the movement of the first pressurization plate under the reaction force of the battery cell, thereby keeping the battery cell in a pressurized state. By disposing the first limiting member, when the pressure applied to the battery cell by the first pressurization plate reaches the first threshold, the correlation between the external driving component and the first pressurization plate can be released, which facilitates the battery pressurization device to circulate along with a production line, thereby improving efficiency.

In some embodiments, the bearing mechanism includes a first end plate, and the first end plate is located on a side of the first pressurization plate facing away from the second pressurization plate. The first limiting member is disposed on the first end plate; and the first limiting member is configured to abut against a surface of the first pressurization plate facing away from the second pressurization plate when the pressure applied to the battery cell by the first pressurization plate reaches the first threshold.

The first end plate can be configured to bear the first limiting member. The first limiting member can abut against the first pressurization plate in the first direction to limit the first pressurization plate in the first direction. The press-against limiting method is simple, easy to operate, and achieves good stability.

In some embodiments, the first limiting member is connected to the first end plate in a threaded mode.

By rotating the first limiting member, that is, moving the first limiting member in the first direction, the first limiting member is pressed against the first pressurization plate or pressure of the first limiting member on the first pressurization plate is released, thereby pressurizing or depressurizing the battery cell. In the embodiments of the present application, by using the threaded connection mode, a state switching operation of the first limiting member can be simpler, thereby facilitating control over the pressurization and depressurization.

In some embodiments, the first limiting member includes a threaded rod and a limiting flange connected to the threaded rod. The limiting flange is located on a side of the first end plate facing away from the first pressurization plate, and the threaded rod passes through the first end plate and is connected to the first end plate in a threaded mode.

By disposing the limiting flange, the connection between the first limiting member and the driving component is facilitated. In addition, the limiting flange can also limit the feeding amount of the threaded rod to reduce the risk that the first pressurization plate is excessively extruded by the threaded rod.

In some embodiments, the first end plate is provided with a first avoidance structure, and the first avoidance structure can avoid the external driving component configured to drive the first pressurization plate to move in the first direction.

When the driving component needs to drive the first pressurization plate to move in the first direction, the driving component can pass through the first avoidance structure to apply pressure to the first pressurization plate. By disposing the first avoidance structure, the risk of interference between the first end plate and the driving component can be reduced.

In some embodiments, the first avoidance structure includes a through hole. The through hole is configured to allow the driving component to pass through. The through hole can be configured to both avoid the driving component and guide the movement of the driving component.

In some embodiments, a plurality of first limiting members are disposed. When the pressure applied to the battery cell by the first pressurization plate reaches the first threshold, the plurality of first limiting members can limit a plurality of points of the first pressurization plate to make the first pressurization plate more uniformly stressed, which reduces the deformation of the first pressurization plate, and improves the consistency of the pressure on the battery cell.

In some embodiments, the battery pressurization device further includes a second limiting member, and the second limiting member is disposed on the bearing mechanism. The second limiting member is configured to limit movement of the second pressurization plate in a direction away from the first pressurization plate when the pressure applied to the battery cell by the second pressurization plate reaches a second threshold.

When the pressure applied to the battery cell by the second pressurization plate reaches the second threshold, the second limiting member can limit the second pressurization plate. At this time, even if the pressure applied to the second pressurization plate by the external driving component is removed, the second limiting member can still maintain the position of the second pressurization plate, which reduces the movement of the second pressurization plate under the reaction force of the battery cell, thereby keeping the battery cell in a pressurized state. By disposing the second limiting member, when the pressure applied to the battery cell by the second pressurization plate reaches the second threshold, the correlation between the external driving component and the second pressurization plate can be released, which facilitates the battery pressurization device to circulate along with the production line, thereby improving efficiency.

In some embodiments, the battery pressurization device further includes a plurality of partition plates arranged in the first direction; and the plurality of partition plates are disposed between the first pressurization plate and the second pressurization plate. Each partition plate is movably disposed on the bearing mechanism in the first direction.

The partition plate can be configured to separate the battery cells to prevent the battery cells against mutual direct contact and compression, thereby reducing the risk of the battery cell being crushed. The partition plate can also be configured to separate a space between the first pressurization plate and the second pressurization plate to position the battery cell, so that the battery cell can be placed into the battery pressurization device. In addition, when the battery pressurization device does not apply pressure to the battery cell, the partition plate can also be configured to limit the battery cell, thereby reducing the shaking amplitude of the battery cell.

In some embodiments, the bearing mechanism includes a bearing plate, a first end plate, and a second end plate. The bearing plate is configured to bear the battery cell. The first end plate and the second end plate are connected to two ends of the bearing plate in the first direction. The first end plate is located on the side of the first pressurization plate facing away from the second pressurization plate, and the second end plate is located on a side of the second pressurization plate facing away from the first pressurization plate. A guiding assembly is disposed on a side of the bearing plate facing the battery cell and connected to the first end plate and the second end plate. The first pressurization plate and the second pressurization plate are movably connected to the guiding assembly in the first direction.

By disposing the guiding assembly, the first pressurization plate and the second pressurization plate can be guided to move in the first direction, thereby reducing the risk of the first pressurization plate and the second pressurization plate deviating during the process of moving towards each other and improving the uniformity of the force on the battery cell.

In some embodiments, the first end plate is provided with a first avoidance structure, and the first avoidance structure can avoid the external driving component configured to drive the first pressurization plate to move in the first direction. The second end plate is provided with a second avoidance structure, and the second avoidance structure can avoid the external driving component configured to drive the second pressurization plate to move in the first direction.

In some embodiments, the first avoidance structure includes a through hole; and/or, the second avoidance structure includes a through hole.

In a second aspect, the present application provides a battery production system, which includes the battery pressurization device provided in any embodiment of the first aspect and a driving component, where the driving component is configured to drive the first pressurization plate and the second pressurization plate to move toward each other in the first direction.

In some embodiments, the driving component includes a first driving member and a second driving member. The first driving member is configured to drive the first pressurization plate and the second pressurization plate to move toward each other in the first direction. The second driving member is configured to drive the first limiting member, so that the first limiting member is pressed against the first pressurization plate or pressure of the first limiting member on the first pressurization plate is released.

### DESCRIPTION OF DRAWINGS

The features, advantages, and technical effects of exemplary embodiments of the present application will be described with reference to the accompanying drawings.
FIG. 1 is a schematic structural diagram of a battery pressurization device according to some embodiments of the present application;
FIG. 2 is a schematic diagram of the battery pressurization device according to some embodiments of the present application viewed from a first direction;
FIG. 3 is a schematic sectional diagram of the battery pressurization device shown in FIG. 2 along a line A-A;
FIG. 4 is a schematic diagram of the battery pressurization device shown in FIG. 2 viewed from a third direction;
FIG. 5 is a schematic sectional diagram of a guiding assembly of a bearing mechanism of the battery pressurization device according to some embodiments of the present application;
FIG. 6 is a schematic sectional diagram of a first end plate and a first limiting member of the battery pressurization device according to some embodiments of the present application;
FIG. 7 is a schematic diagram of a battery pressurization device according to some other embodiments of the present application viewed from the first direction; and
FIG. 8 is a schematic structural diagram of a battery production system according to some embodiments of the present application.

The accompanying drawings may not be drawn in accordance with the actual scale. Description of reference numerals:
1. Battery pressurization device;
2. bearing mechanism; 21. first end plate; 211. first avoidance structure; 22. second end plate; 221. second avoidance structure; 23. bearing plate; 24. guiding assembly; 241. guiding shaft; 242. slider; 2421. fastener; 25. side plate;
3. first pressurization plate; 4. second pressurization plate;
5. first limiting member; 51. threaded rod; 52. limiting flange;
6. second limiting member; 7. partition plate;
200. battery cell; 300. driving component; 301. first driving member; 302. second driving member;
X. first direction; Y. second direction; and Z. third direction.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All other embodiments obtained by those of ordinary skill in the art based on the embodiments in the present application without any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "include" and "have" and any variations thereof in the specification and the claims of the present application as well as the above description of the drawings are intended to cover non-exclusive inclusions. The terms "first," "second," and the like in the specification and the claims of the present application as well as the above drawings are used to distinguish different objects, rather than to describe a specific order or primary-secondary relationship.

Reference in the present application to an "embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting," "connecting," "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is merely an association that describes the associated object, indicating that there can be three kinds of relationships, for example, A and/or B may denote the following three situations: A exists alone, A and B exist at the same time, and B exists alone. In addition, the character "/" in the present application generally means that the associated objects before and after it are in an "or" relationship.

In the embodiments of the present application, the same reference numerals denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

The appearance of "plurality" in the present application refers to two or more (including two).

With the development of the battery technology, battery cells are used in more and more fields, and have gradually replaced traditional fossil energy in the field of automotive power. Battery cells can store chemical energy and convert it into electrical energy in a controlled manner. In recyclable battery cells, active substances can be activated by charging for reuse after discharge.

The battery cell may be a lithium-ion battery, a sodium-ion battery, a sodium/lithium-ion battery, a lithium metal battery, a sodium metal battery, a lithium-sulfur battery, a magnesium-ion battery, a nickel-hydrogen battery, a nickel-cadmium battery, a lead storage battery, or the like, which is not limited in the embodiments of the present application.

The production process of the battery cell generally includes processes such as stirring, coating, rolling, slitting, assembly, and formation. The formation process is an extremely important process, which has a crucial impact on the cycle performance of the battery cell. The formation of the battery cell can refer to the first charge and discharge process of the battery cell after electrolyte injection. For example, in the lithium-ion battery cell, by means of formation, the active substances in the battery cell can be activated, thereby activating the lithium-ion battery. At the same time, the lithium salt has a side reaction with the electrolyte, generating a solid electrolyte interface (SEI) film on the negative electrode side of the battery cell. The film can prevent the side reaction from further occurring, thereby reducing the loss of active lithium in the battery cell. The quality of the SEI film has a significant impact on the cycle life, the initial capacity loss, the rate performance or the like of the battery cell.

During the formation process, gas is generated inside the battery cell. If the gas cannot be discharged, it will affect the cycle performance of the battery cell. For example, the lithium-ion battery cell may experience problems such as lithium plating at the interface. In addition, the gas can also cause the battery cell to expand and deform, resulting in the battery cell failing to meet size specification requirements. Therefore, during the formation process, it is usually necessary to apply pressure to the battery cell to accelerate the discharge of the gas, reduce the gas remaining inside the battery cell, and reduce the deformation of the battery cell, thereby improving the appearance yield of the battery cell.

In view of this, embodiments of the present application provide a battery pressurization device, which makes a first pressurization plate and a second pressurization plate move so as to apply pressure to the battery cell between the first pressurization plate and the second pressurization plate from both sides, thereby limiting the deformation of the battery cell, and improving the yield of the battery cell.

The battery pressurization device disclosed in the embodiments of present application can be applied to the battery formation process, as well as other battery processes. For example, the battery pressurization device in the embodiments of the present application can also be used in the electrolyte injection process; specifically, in the electrolyte injection process, an electrolyte injection apparatus is configured to inject an electrolyte into the battery cell at high pressure and high speed, thereby increasing the internal pressure of the battery cell, while the battery pressurization device in the embodiments of the present application can apply pressure to the battery cell from the outside to counteract the internal pressure of the battery cell, thereby reducing the deformation of the battery cell.

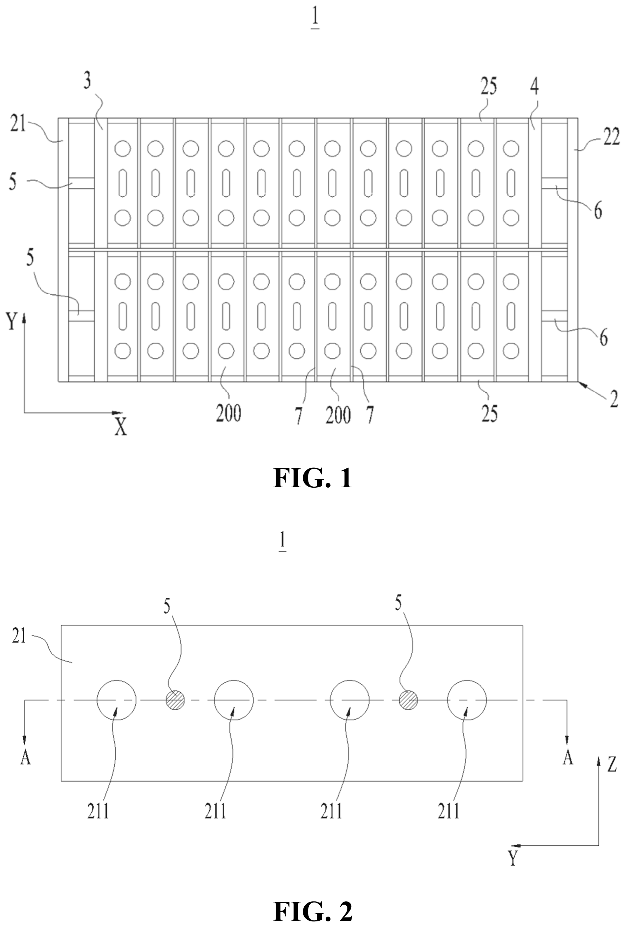

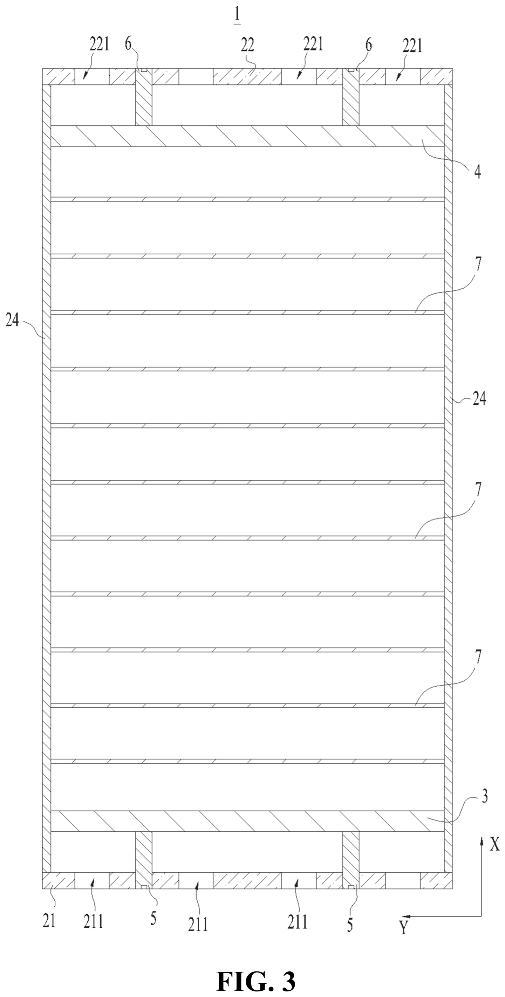

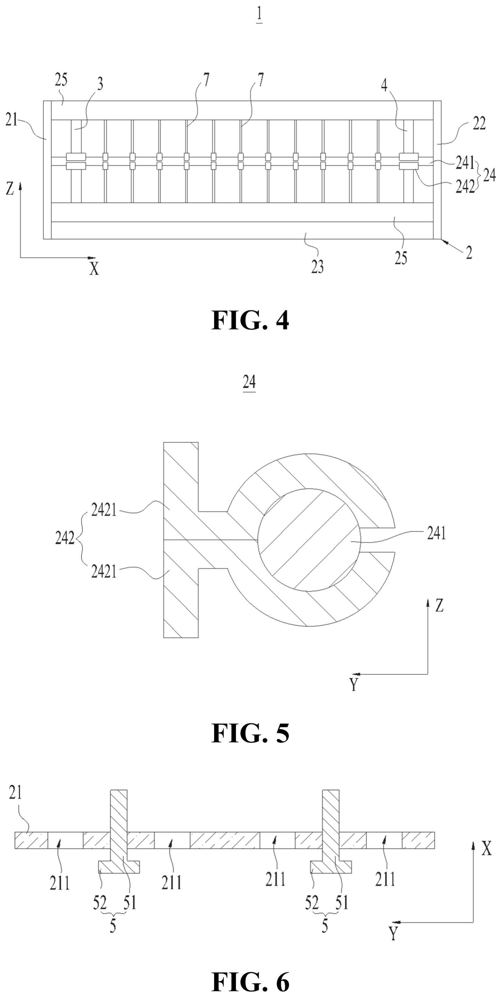

FIG. 1 is a schematic structural diagram of a battery pressurization device according to some embodiments of the present application; FIG. 2 is a schematic diagram of the battery pressurization device according to some embodiments of the present application viewed from a first direction; FIG. 3 is a schematic sectional diagram of the battery pressurization device shown in FIG. 2 along a line A-A; and FIG. 4 is a schematic diagram of the battery pressurization device shown in FIG. 2 viewed from a third direction.

With reference to FIG. 1 to FIG. 4 together, a battery pressurization device 1 in the embodiments of the present application includes a bearing mechanism 2, a first pressurization plate 3, and a second pressurization plate 4. The first pressurization plate 3 and the second pressurization plate 4 are disposed on the bearing mechanism 2 and are opposite to each other in a first direction X. The first pressurization plate 3 and the second pressurization plate 4 can move towards each other in the first direction X to apply pressure to a battery cell 200 disposed between the first pressurization plate 3 and the second pressurization plate 4 from both sides.

The bearing mechanism 2 can be configured to bear the first pressurization plate 3 and the second pressurization plate 4. As an example, when it is necessary to pressurize the battery cell 200, the bearing mechanism 2 can also be configured to bear the battery cell 200.

The first pressurization plate 3 is movably connected to the bearing mechanism 2 in the first direction X, and the second pressurization plate 4 is movably connected to the bearing mechanism 2 in the first direction X.

The first pressurization plate 3 and the second pressurization plate 4 can be configured to pressurize one or more battery cells 200.

In some examples, the plurality of battery cells 200 are arranged in the first direction X to form a battery column; alternatively, when it is necessary to pressurize the battery cell 200, one battery column can be arranged between the first pressurization plate 3 and the second pressurization plate 4, or a plurality of battery columns disposed side by side can be arranged.

In some other examples, the plurality of battery cells 200 can be arranged in a second direction Y to form a battery row, and the second direction Y is perpendicular to the first direction X; and when it is necessary to pressurize the battery cell 200, one battery row can be arranged between the first pressurization plate 3 and the second pressurization plate 4.

One or more first pressurization plate 3 can be disposed. One or more second pressurization plate 4 can be disposed. For example, a number of the first pressurization plate 3 and a number of the second pressurization plate 4 are the same, and the first pressurization plate 3 and second pressurization plate 4 are disposed correspondingly.

When it is necessary to pressurize the battery cells 200, the plurality of battery cells 200 can be arranged between the first pressurization plate 3 and the second pressurization plate 4. An external driving component 300 can drive the first pressurization plate 3 and the second pressurization plate 4 to move towards each other in the first direction X to reduce a distance between the first pressurization plate 3 and the second pressurization plate 4, thereby allowing the first pressurization plate 3 and the second pressurization plate 4 to apply pressure to the battery cell 200 from both sides, limiting the deformation of the battery cell 200, and improving the yield of the battery cell 200. By changing the displacement of the first pressurization plate 3 and the second pressurization plate 4, the pressure applied to the battery cell 200 by the first pressurization plate 3 and the second pressurization plate 4 can be effectively controlled, thereby achieving pressure controllability and reducing the risk of electrolyte overflow caused by excessive pressure.

In the embodiments of the present application, pressure is applied to the battery cell 200 by moving the first pressurization plate 3 and the second pressurization plate 4 toward each other, rather than by only moving the first pressurization plate 3 to apply pressure to the battery cell 200.

For example, if pressure is applied to a column of battery cells 200 by only moving the first pressurization plate 3, the pressure may be gradually transmitted from the first pressurization plate 3 to the plurality of battery cells 200, which can cause uneven pressure on the battery cells 200, and the battery cell 200 closest to the first pressurization plate 3 is subjected to greater pressure. In addition, when the battery cell 200 is under pressure, the battery cell 200 may undergo small compressive deformation in the first direction X. The cumulative compression of the plurality of battery cells 200 may cause the battery cells 200 to shift in the first direction X, especially the battery cell 200 closest to the first pressurization plate 3 shifts most. The larger the number of the battery cells 200, the larger the shift of the battery cell 200 closest to the first pressurization plate 3. If the shift of the battery cell 200 is too large, it may affect the connection between the battery cell 200 and an external apparatus (for example, during formation, due to the shift, an electrode terminal of the battery cell 200 may be misaligned with a probe of a formation apparatus, causing potential safety hazards), consequently affecting the yield of the battery cell 200.

In the embodiments of the present application, the first pressurization plate 3 and the second pressurization plate 4 apply pressure to the battery cell 200 from both sides simultaneously, which can reduce the maximum shift of the battery cell 200 under pressure, reduce the risk of misalignment between the battery cell 200 and other components, and improve the product yield.

The pressurization method in the embodiments of the present application is simple, easy to operate, and low in cost. In addition, the pressurization involves fewer apparatuses, which can reduce the floor space and save the factory layout space.

For example, with the number of the battery cell 200 remaining unchanged, compared with the scheme of applying pressure to one side by using the first pressurization plate 3, the embodiments of the present application can reduce the maximum shift of the battery cell 200 under pressure by 50%.

In some embodiments, the battery pressurization device 1 can be used in the battery formation process to expel the gas inside the battery cell 200 during the formation process.

In some embodiments, the battery pressurization device 1 can be used in the battery electrolyte injection process to counteract positive pressure applied into the battery cell 200 by the electrolyte injection apparatus during the electrolyte injection process to reduce the deformation of a housing of the battery cell 200.

In some embodiments, after the pressurization-related process is completed, the external driving component 300 no longer applies pressure to the first pressurization plate 3 and the second pressurization plate 4; at this time, the battery pressurization device 1 in the embodiments of the present application can also be used as a conventional tray for carrying the battery cell 200. The battery pressurization device 1 can circulate along with a production line, thereby improving production capacity and logistics line planning.

In some embodiments, the battery pressurization device 1 can also be applied to other scenarios where the battery cell 200 needs to be pressurized, such as scenarios where the battery cell 200 undergoes long-term charge-discharge cycles. In these scenarios, the first pressurization plate 3 and the second pressurization plate 4 apply pressure to the battery cell 200, making positive and negative electrode plates of the battery cell 200 fit tightly with a separator, thereby improving the uniformity of the interface reaction and prolonging the service life of batteries.

In some embodiments, when it is necessary to pressurize the battery cell 200, the first pressurization plate 3 and the second pressurization plate 4 move toward the center position at approximately the same speed, with the center position of the battery pressure device 1 in the first direction X as a reference.

In some embodiments, the driving component 300 is arranged independently of the battery pressurization device 1, so that the battery pressurization device 1 can circulate in the production line.

In some embodiments, the battery pressurization device 1 further includes a first limiting member 5, and the first limiting member 5 is disposed on the bearing mechanism 2. The first limiting member 5 is configured to limit movement of the first pressurization plate 3 in a direction away from the second pressurization plate 4 when the pressure applied to the battery cell 200 by the first pressurization plate 3 reaches a first threshold.

The first threshold can be set according to the pressure requirements of the battery cell 200.

One or more first limiting members 5 can be disposed. As an example, a plurality of first limiting members 5 can be disposed.

The position of the first limiting member 5 can be set as needed. For example, the first limiting member 5 can be disposed on a side of the first pressurization plate 3 facing away from the second pressurization plate 4 in the first direction X, or on a side of the first pressurization plate 3 in the second direction Y, or on a side of the first pressurization plate 3 in a third direction Z, where the first direction X, the second direction Y, and the third direction Z intersect pairwise. Optionally, the first direction X, the second direction Y, and the third direction Z are pairwise perpendicular.

The first limiting member 5 can be driven manually or by the external driving component 300.

When the pressure applied to the battery cell 200 by the first pressurization plate 3 reaches the first threshold, the first limiting member 5 can limit the first pressurization plate 3. At this time, even if the pressure applied to the first pressurization plate 3 by the external driving component 300 is removed, the first limiting member 5 can still maintain the position of the first pressurization plate 3, which reduces the movement of the first pressurization plate 3 under the reaction force of the battery cell 200, thereby keeping the battery cell 200 in a pressurized state.

By disposing the first limiting member 5 in the embodiments of the present application, when the pressure applied to the battery cell 200 by the first pressurization plate 3 reaches the first threshold, the correlation between the external driving component 300 and the first pressurization plate 3 can be released, which facilitates the battery pressurization device 1 to circulate along with a production line, thereby improving efficiency.

In some embodiments, the bearing mechanism 2 includes a first end plate 21, and the first end plate 21 is located on the side of the first pressurization plate 3 facing away from the second pressurization plate 4. The first limiting member 5 is arranged on the first end plate 21. The first limiting member 5 is configured to abut against a surface of the first pressurization plate 3 facing away from the second pressurization plate 4 when the pressure applied to the battery cell 200 by the first pressurization plate 3 reaches the first threshold.

The first end plate 21 can be configured to bear the first limiting member 5. The first limiting member 5 can abut against the first pressurization plate 3 in the first direction X to limit the first pressurization plate 3 in the first direction X. The press-against limiting method is simple, easy to operate, and achieves good stability.

In some embodiments, the first limiting member 5 is connected to the first end plate 21 in a threaded mode.

For example, the first end plate 21 is provided with a threaded hole, and the first limiting member 5 includes a bolt, a screw, a threaded rod or other threaded members.

By rotating the first limiting member 5, that is, moving the first limiting member 5 in the first direction X, the first limiting member 5 is pressed against the first pressurization plate 3 or pressure of the first limiting member 5 on the first pressurization plate 3 is released, thereby pressurizing or depressurizing the battery cell 200. In the embodiments of the present application, by using the threaded connection mode, a state switching operation of the first limiting member 5 can be simpler, thereby facilitating control over the pressurization and depressurization.

In some embodiments, the first end plate 21 is provided with a first avoidance structure 211, and the first avoidance structure 211 can avoid the external driving component 300 configured to drive the first pressurization plate 3 to move in the first direction X.

For example, the first avoidance structure 211 may include at least one of a hole, a slot, and a notch.

One or more first avoidance structure 211 can be disposed.

When the driving component 300 needs to drive the first pressurization plate 3 to move in the first direction X, the driving component 300 can pass through the first avoidance structure 211 to apply pressure to the first pressurization plate 3. By disposing the first avoidance structure 211 in the embodiments of the present application, the risk of interference between the first end plate 21 and the driving component 300 can be reduced.

In some embodiments, a plurality of first avoidance structure 211 are disposed. By disposing the plurality of first avoidance structures 211, the driving component 300 can apply force to a plurality of points of the first pressurization plate 3, which improves the uniformity of the force on the first pressurization plate 3, thereby reducing the deformation of the first pressurization plate 3.

In some embodiments, the first avoidance structure 211 includes a through hole, and the through hole is configured to allow the driving component 300 to pass through. The through hole can be configured to both avoid the driving component 300 and guide the movement of the driving component 300.

In some embodiments, the driving component 300 includes a push rod, and the push rod can pass through the through hole and is pressed against the first pressurization plate 3 to apply pressure to the first pressurization plate 3.

In some embodiments, a plurality of first limiting members 5 are disposed.

The shapes of the plurality of first limiting members 5 may be the same or different.

The arrangement positions of the plurality of first limiting members 5 can be set according to design requirements. For example, the plurality of first limiting members 5 can be arranged spaced apart in a linear direction; for another example, the plurality of first limiting members 5 can be arranged in a rectangular array or an annular array.

When the pressure applied to the battery cell 200 by the first pressurization plate 3 reaches the first threshold, the plurality of first limiting members 5 can limit the plurality of points of the first pressurization plate 3 to make the first pressurization plate 3 more uniformly stressed, reduce the deformation of the first pressurization plate 3, and improve the consistency of the pressure on the battery cell 200.

In some embodiments, a number of the first limiting member 5 is positively correlated to an area of the first pressurization plate 3. For example, the larger the area of the first pressurization plate 3, the more first limiting members 5 need to be disposed in order to improve the uniformity of the force on the first pressurization plate 3.

The position of the first limiting member 5 can be determined according to the shape, size and other parameters of the first pressurization plate 3.

In some embodiments, the plurality of first limiting members 5 are arranged in an array in the second direction Y and the third direction Z.

In some embodiments, the battery pressurization device 1 further includes a second limiting member 6, and the second limiting member 6 is disposed on the bearing mechanism 2. The second limiting member 6 is configured to limit movement of the second pressurization plate 4 in a direction away from the first pressurization plate 3 when the pressure applied to the battery cell 200 by the second pressurization plate 4 reaches a second threshold.

The second threshold and the first threshold can be the same or different. Optionally, the first threshold is equal to the second threshold.

One or more second limiting members 6 can be disposed. As an example, a plurality of second limiting members 6 can be disposed.

The position of the second limiting member 6 can be set as needed. For example, the second limiting member 6 can be disposed on a side of the second pressurization plate 4 facing away from the first pressurization plate 3 in the first direction X.

The second limiting member 6 can be driven manually or by the external driving component 300.

When the pressure applied to the battery cell 200 by the second pressurization plate 4 reaches the second threshold, the second limiting member 6 can limit the second pressurization plate 4. At this time, even if the pressure applied to the second pressurization plate 4 by the external driving component 300 is removed, the second limiting member 6 can still maintain the position of the second pressurization plate 4, which reduces the movement of the second pressurization plate 4 under the reaction force of the battery cell 200, thereby keeping the battery cell 200 in a pressurized state.

By disposing the second limiting member 6 in the embodiments of the present application, when the pressure applied to the battery cell 200 by the second pressurization plate 4 reaches the second threshold, the correlation between the external driving component 300 and the second pressurization plate 4 can be released, which facilitates the battery pressurization device 1 to circulate along with the production line, thereby improving efficiency.

In some embodiments, the bearing mechanism 2 includes a second end plate 22, and the second end plate 22 is located on the side of the second pressurization plate 4 facing away from the first pressurization plate 3. The second limiting member 6 is arranged on the second end plate 22. The second limiting member 6 is configured to abut against a surface of the second pressurization plate 4 facing away from the first pressurization plate 3 when the pressure applied to the battery cell 200 by the second pressurization plate 4 reaches the second threshold.

The second end plate 22 can be configured to bear the second limiting member 6. The second limiting member 6 can abut against the second pressurization plate 4 in the first direction X to limit the second pressurization plate 4 in the first direction X. The press-against limiting method is simple, easy to operate, and achieves good stability.

In some embodiments, the second limiting member 6 is connected to the second end plate 22 in a threaded mode.

For example, the second end plate 22 is provided with a threaded hole, and the second limiting member 6 includes a bolt, a screw, a threaded rod or other threaded members.

By rotating the second limiting member 6, that is, moving the second limiting member 6 in the first direction X, the second limiting member 6 is pressed against the second pressurization plate 4 or pressure of the second limiting member 6 on the second pressurization plate 4 is released, thereby pressurizing or depressurizing the battery cell 200. In the embodiments of the present application, by using the threaded connection mode, a state switching operation of the second limiting member 6 can be simpler, thereby facilitating control over the pressurization and depressurization.

In some embodiments, the second end plate 22 is provided with a second avoidance structure 221, and the second avoidance structure 221 can avoid the external driving component 300 configured to drive the second pressurization plate 4 to move in the first direction X.

For example, the second avoidance structure 221 may include at least one of a hole, a slot, and a notch.

One or more second avoidance structure 221 can be disposed.

When the driving component 300 needs to drive the second pressurization plate 4 to move in the first direction X, the driving component 300 can pass through the second avoidance structure 221 to apply pressure to the second pressurization plate 4. In the embodiments of the present application, by disposing the second avoidance structure 221, the risk of interference between the second end plate 22 and the driving component 300 can be reduced.

In some embodiments, a plurality of second avoidance structure 221 are disposed. By disposing the plurality of second avoidance structures 221, the driving component 300 can apply force to a plurality of points of the second pressurization plate 4, which improves the uniformity of the force on the second pressurization plate 4, thereby reducing the deformation of the second pressurization plate 4.

In some embodiments, the second avoidance structure 221 includes a through hole, and the through hole is configured to allow the driving component 300 to pass through. The through hole can be configured to both avoid the driving component 300 and guide the movement of the driving component 300.

In some embodiments, the driving component 300 includes a push rod, and the push rod can pass through the through hole and is pressed against the second pressurization plate 4 to apply pressure to the second pressurization plate 4.

In some embodiments, a plurality of second limiting members 6 are disposed.

When the pressure applied to the battery cell 200 by the second pressurization plate 4 reaches the second threshold, the plurality of second limiting members 6 can limit the plurality of points of the second pressurization plate 4 to make the second pressurization plate 4 more uniformly stressed, reduce the deformation of the second pressurization plate 4, and improve the consistency of the pressure on the battery cell 200.

In some embodiments, the battery pressurization device 1 further includes a plurality of partition plates 7 arranged in the first direction X; and the plurality of partition plates 7 are disposed between the first pressurization plate 3 and the second pressurization plate 4. Each partition plate 7 is movably disposed on the bearing mechanism 2 in the first direction X.

One battery cell 200 or a plurality of battery cells 200 may be arranged between the adjacent partition plates 7.

The partition plate 7 can be configured to separate the battery cells 200 to prevent the battery cells 200 against mutual direct contact and compression, thereby reducing the risk of the battery cell 200 being crushed. The partition plate 7 can also be configured to separate a space between the first pressurization plate 3 and the second pressurization plate 4 to position the battery cell 200, so that the battery cell 200 can be placed into the battery pressurization device 1. In addition, when the battery pressurization device 1 does not apply pressure to the battery cell 200, the partition plate 7 can also be configured to limit the battery cell 200, thereby reducing the shaking amplitude of the battery cell 200.

In some embodiments, a surface of the partition plate 7 is provided with an elastic layer. The elastic layer is configured to contact with and be pressed against the battery cell 200. By disposing the elastic layer, a buffering effect can be achieved, thereby reducing the risk of damage to the battery cell 200 caused by the impact of an external force.

In some embodiments, the partition plate 7 separates adjacent battery cells in the first direction X.

In some embodiments, the material of the elastic layer includes silica gel.

In some embodiments, the bearing mechanism 2 includes a bearing plate 23, a first end plate 21, a second end plate 22, and a guiding assembly 24. The bearing plate 23 is configured to bear the battery cell 200. The first end plate 21 and the second end plate 22 are connected to two ends of the bearing plate 23 in the first direction X. The first end plate 21 is located on the side of the first pressurization plate 3 facing away from the second pressurization plate 4, and the second end plate 22 is located on the side of the second pressurization plate 4 facing away from the first pressurization plate 3. The guiding assembly 24 is disposed on a side of the bearing plate 23 facing the battery cell 200 and connected to the first end plate 21 and the second end plate 22. The first pressurization plate 3 and the second pressurization plate 4 are movably connected to the guiding assembly 24 in the first direction X.

One or more guiding assemblies 24 can be disposed.

By disposing the guiding assembly 24, the first pressurization plate 3 and the second pressurization plate 4 can be guided to move in the first direction X, thereby reducing the risk of the first pressurization plate 3 and the second pressurization plate 4 deviating during the process of moving towards each other and improving the uniformity of the force on the battery cell 200.

In some embodiments, the bearing plate 23 can be of a flat plate structure.

In some embodiments, at least two guiding assemblies 24 are disposed. The two guiding assemblies 24 can be disposed spaced apart in the second direction Y. Two ends of the first pressurization plate 3 in the second direction Y are connected to the two guiding assemblies 24, and two ends of the second pressurization plate 4 in the second direction Y are connected to the two guiding assemblies 24.

In some embodiments, in the third direction Z, the first pressurization plate 3 and the bearing plate 23 are disposed spaced apart to reduce the resistance on the movement of the first pressurization plate 3 during the movement of the first pressurization plate 3.

In some embodiments, in the third direction Z, the second pressurization plate 4 is disposed spaced apart from the bearing plate 23.

In some embodiments, each partition plate 7 is movably connected to the guiding assembly 24 in the first direction X.

In some embodiments, the first end plate 21 is provided with a first avoidance structure 211, and the first avoidance structure 211 can avoid the external driving component 300 configured to drive the first pressurization plate 3 to move in the first direction X. The second end plate 22 is provided with a second avoidance structure 221, and the second avoidance structure 221 can avoid the external driving component 300 configured to drive the second pressurization plate 4 to move in the first direction X.

In some embodiments, the first avoidance structure 211 includes a through hole. In some other embodiments, the second avoidance structure 221 includes a through hole. In some embodiments, the first avoidance structure 211 includes a through hole, and the second avoidance structure 221 includes a through hole.

In some embodiments, the bearing mechanism 2 further includes a side plate 25, and the side plate 25 is connected to the first end plate 21 and the second end plate 22.

In some embodiments, a plurality of side plates 25 can be disposed.

In some embodiments, four side plates 25 can be disposed. Two side plates 25 are located on the same side of the plurality of partition plates 7 in the second direction Y and disposed spaced apart in the third direction Z, and one guiding assembly 24 is disposed between the two side plates 25.

The other two side plates 25 are located on the other side of the plurality of partition plates 7 in the second direction Y and disposed spaced apart in the third direction Z, and another guiding assembly 24 is disposed between the two side plates 25.

FIG. 5 is a schematic sectional diagram of the guiding assembly of the bearing mechanism of the battery pressurization device according to some embodiments of the present application.

As shown in FIG. 4 and FIG. 5, in some embodiments, the guiding assembly 24 includes a guiding shaft 241 and sliders 242. The guiding shaft 241 extends in the first direction X and is connected to the first end plate 21 and the second end plate 22. The plurality of sliders 242 are arranged on the guiding shaft 241 in the first direction X, and each slider 242 is slidably connected to the guiding shaft 241 in the first direction X.

The first pressurization plate 3 is connected to the guiding shaft 241 via at least one slider 242. The second pressurization plate 4 is connected to the guiding shaft 241 via at least one slider 242. Each partition plate 7 is connected to the guiding shaft 241 via at least one slider 242.

In some embodiments, the slider 242 may include two fasteners 2421 fastened to the guiding shaft 241. The two fasteners 2421 are detachably connected.

FIG. 6 is a schematic sectional diagram of the first end plate and the first limiting member of the battery pressurization device according to some embodiments of the present application.

As shown in FIG. 6, in some embodiments, the first limiting member 5 includes a threaded rod 51 and a limiting flange 52 connected to the threaded rod 51. The limiting flange 52 is located on a side of the first end plate 21 facing away from the first pressurization plate 3, and the threaded rod 51 passes through the first end plate 21 and is connected to the first end plate 21 in a threaded mode.

The limiting flange 52 protrudes out of an outer circumferential surface of the threaded rod 51.

By disposing the limiting flange 52, the connection between the first limiting element 5 and the driving component 300 is facilitated. In addition, the limiting flange 52 can also limit the feeding amount of the threaded rod 51 to reduce the risk that the first pressurization plate 3 is excessively extruded by the threaded rod 51.

In some embodiments, the structure of the second limiting member may be substantially the same as that of the first limiting member 5. For example, the second limiting member also includes a threaded rod and a limiting flange connected to the threaded rod. The limiting flange of the second limiting member is located on a side of the second end plate facing away from the second pressurization plate, and the threaded rod of the second limiting member passes through the second end plate and is connected to the second end plate in a threaded mode.

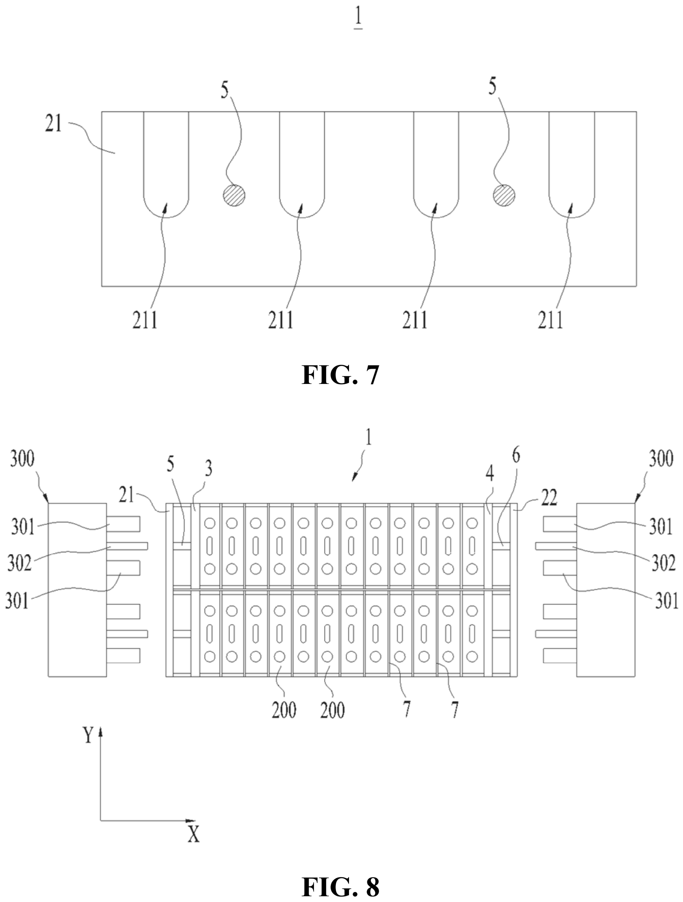

FIG. 7 is a schematic diagram of a battery pressurization device according to some other embodiments of the present application viewed from the first direction.

As shown in FIG. 7, in some embodiments, the first avoidance structure 211 may include an avoidance groove. For example, the avoidance groove is recessed from one end of the first end plate 21 in the third direction Z.

FIG. 8 is a schematic structural diagram of a battery production system according to some embodiments of the present application.

As shown in FIG. 3 and FIG. 8, embodiments of the present application provide a battery production system, which includes the battery pressurization device 1 provided in any embodiment mentioned before and a driving component 300, where the driving component 300 is configured to drive the first pressurization plate 3 and the second pressurization plate 4 to move toward each other in the first direction X.

One or more driving components 300 may be disposed. In some examples, the driving component 300 is an integral unit that can be connected to both the first pressurization plate 3 and the second pressurization plate 4. In some other examples, two driving components 300 are disposed, and the two driving components 300 are configured to drive the first pressurization plate 3 and the second pressurization plate 4, respectively.

When it is necessary to pressurize the battery cells 200, the plurality of battery cells 200 can be arranged between the first pressurization plate 3 and the second pressurization plate 4. The driving component 300 can drive the first pressurization plate 3 and the second pressurization plate 4 to move towards each other in the first direction X to reduce a distance between the first pressurization plate 3 and the second pressurization plate 4, thereby allowing the first pressurization plate 3 and the second pressurization plate 4 to apply pressure to the battery cell 200 from both sides, limiting the deformation of the battery cell 200, and improving the yield of the battery cell 200. By changing the displacement of the first pressurization plate 3 and the second pressurization plate 4, the pressure applied to the battery cell 200 by the first pressurization plate 3 and the second pressurization plate 4 can be effectively controlled, thereby achieving pressure controllability and reducing the risk of electrolyte overflow caused by excessive pressure.

In some embodiments, the driving component 300 includes a motor, a cylinder, a hydraulic cylinder, or other power components.

In some embodiments, two driving components 300 are disposed, and the two driving components 300 are configured to drive the first pressurization plate 3 and the second pressurization plate 4, respectively.

The driving component 300 that drives the first pressurization plate 3 is described below.

For example, the driving component 300 includes a first driving member 301 and a second driving member 302. The first driving member 301 is configured to drive the first pressurization plate 3 and the second pressurization plate 4 to move toward each other in the first direction X. The second driving member 302 is configured to drive the first limiting member 5, so that the first limiting member 5 is pressed against the first pressurization plate 3 or pressure of the first limiting member 5 on the first pressurization plate 3 is released.

Optionally, the first driving member 301 is configured to push the first pressurization plate 3 in the first direction X.

Optionally, the first driving member 301 includes a cylinder and a push rod, and the cylinder drives the push rod to extend or retract so that the push rod can pass through the first avoidance structure.

Optionally, the first driving member 301 includes a motor and a rotating member. The rotating member is configured to cooperate with the first limiting member 5. The motor drives the rotating member to rotate, so as to drive the first limiting member 5 to rotate through the rotating member, thereby converting the rotation of the first limiting member 5 into the movement of the first limiting member 5 in the first direction X.

In some embodiments, the driving component 300 driving the first pressurization plate 3 is the same as the driving component 300 driving the second pressurization plate 4.

In some embodiments, the battery production system further includes a treatment apparatus (not shown) for performing specific treatment on the battery cell.

For example, in some examples, the treatment apparatus may be a negative pressure apparatus, and the negative pressure apparatus is configured to extract the gas inside the battery cell during the battery cell formation process.

In some other examples, the treatment apparatus may be a liquid injection apparatus, and the liquid injection apparatus can be configured to inject an electrolyte into the battery cell.

With reference to FIG. 1 to FIG. 4, the embodiments of the present application provide the battery pressurization device 1, which includes the bearing mechanism 2, the first pressurization plate 3, the second pressurization plate 4, the first limiting member 5, the second limiting member 6, and the plurality of partition plates 7.

The bearing mechanism 2 includes the bearing plate 23, the first end plate 21, the second end plate 22, and the guiding assembly 24. The bearing plate 23 is configured to bear the battery cell 200. The first end plate 21 and the second end plate 22 are connected to the two ends of the bearing plate 23 in the first direction X. The guiding assembly 24 is disposed on the side of the bearing plate 23 facing the battery cell 200 and connected to the first end plate 21 and the second end plate 22.

In the first direction X, the first pressurization plate 3 and the second pressurization plate 4 are located between the first end plate 21 and the second end plate 22. The first end plate 21 is located on the side of the first pressurization plate 3 facing away from the second pressurization plate 4, and the second end plate 22 is located on the side of the second pressurization plate 4 facing away from the first pressurization plate 3.

The plurality of partition plates 7 are arranged between the first pressurization plate 3 and the second pressurization plate 4 in the first direction X. The first pressurization plate 3 and the second pressurization plate 4 are movably connected to the guiding assembly 24 in the first direction X, and each partition plate 7 is movably connected to the guiding assembly 24 in the first direction X.

The first pressurization plate 3 and the second pressurization plate 4 can move towards each other in the first direction X to apply pressure to the battery cell 200 disposed between the first pressurization plate 3 and the second pressurization plate 4 from both sides.

The first limiting member 5 is connected to the first end plate 21 in the threaded mode. The first limiting member 5 is configured to abut against the surface of the first pressurization plate 3 facing away from the second pressurization plate 4 when the pressure applied to the battery cell 200 by the first pressurization plate 3 reaches the first threshold.

The second limiting member 6 is connected the second end plate 22 in the threaded mode. The second limiting member 6 is configured to abut against the surface of the second pressurization plate 4 facing away from the first pressurization plate 3 when the pressure applied to the battery cell 200 by the second pressurization plate 4 reaches the second threshold.

The first end plate 21 and the second end plate 22 are each provided with a through hole. The external driving component 300 can pass through the through hole of the first end plate 21 and push the first pressurization plate 3, and can pass through the through hole of the second end plate 22 and push the second pressurization plate 4.

Although the present application has been described with reference to the preferred embodiments, without departing from the scope of the present application, various improvements may be made to the present application and parts therein may be replaced with equivalents. In particular, the technical features mentioned in the embodiments may be combined in any way, as long as there is no structural conflict. The present application is not limited to the specific embodiments disclosed herein, but rather includes all technical solutions falling within the scope of the claims.

## Claims

1. A battery pressurization device, comprising:
a bearing mechanism; and
a first pressurization plate and a second pressurization plate, disposed on the bearing mechanism and opposite to each other in a first direction, wherein the first pressurization plate and the second pressurization plate are able to move towards each other in the first direction to apply pressure to a battery cell disposed between the first pressurization plate and the second pressurization plate from both sides.

2. The battery pressurization device according to claim 1, further comprising a first limiting member, wherein the first limiting member is disposed on the bearing mechanism; and
the first limiting member is configured to limit movement of the first pressurization plate in a direction away from the second pressurization plate when the pressure applied to the battery cell by the first pressurization plate reaches a first threshold.

3. The battery pressurization device according to claim 2, wherein the bearing mechanism comprises a first end plate, and the first end plate is located on a side of the first pressurization plate facing away from the second pressurization plate;
the first limiting member is disposed on the first end plate; and the first limiting member is configured to abut against a surface of the first pressurization plate facing away from the second pressurization plate when the pressure applied to the battery cell by the first pressurization plate reaches the first threshold.

4. The battery pressurization device according to claim 3, wherein the first limiting member is connected to the first end plate in a threaded mode.

5. The battery pressurization device according to claim 3 or 4, wherein the first limiting member comprises a threaded rod and a limiting flange connected to the threaded rod, the limiting flange is located on a side of the first end plate facing away from the first pressurization plate, and the threaded rod passes through the first end plate and is connected to the first end plate in a threaded mode.

6. The battery pressurization device according to any one of claims 3 to 5, wherein the first end plate is provided with a first avoidance structure, and the first avoidance structure is able to avoid an external driving component configured to drive the first pressurization plate to move in the first direction.

7. The battery pressurization device according to claim 6, wherein the first avoidance structure comprises a through hole, and the through hole is configured to allow the driving component to pass through.

8. The battery pressurization device according to any one of claims 2 to 7, wherein a plurality of first limiting members are disposed.

9. The battery pressurization device according to any one of claims 2 to 8, further comprising a second limiting member, wherein the second limiting member is disposed on the bearing mechanism; and
the second limiting member is configured to limit movement of the second pressurization plate in a direction away from the first pressurization plate when the pressure applied to the battery cell by the second pressurization plate reaches a second threshold.

10. The battery pressurization device according to any one of claims 1 to 9, further comprising a plurality of partition plates arranged in the first direction; wherein the plurality of partition plates are disposed between the first pressurization plate and the second pressurization plate; and
each partition plate is movably disposed on the bearing mechanism in the first direction.

11. The battery pressurization device according to any one of claims 1 to 10, wherein the bearing mechanism comprises:
a bearing plate, configured to bear the battery cell;
a first end plate and a second end plate, connected to two ends of the bearing plate in the first direction, wherein the first end plate is located on the side of the first pressurization plate facing away from the second pressurization plate, and the second end plate is located on a side of the second pressurization plate facing away from the first pressurization plate; and
a guiding assembly, disposed on a side of the bearing plate facing the battery cell and connected to the first end plate and the second end plate, wherein the first pressurization plate and the second pressurization plate are movably connected to the guiding assembly in the first direction.

12. The battery pressurization device according to claim 11, wherein
the first end plate is provided with a first avoidance structure, and the first avoidance structure is able to avoid an external driving component configured to drive the first pressurization plate to move in the first direction; and
the second end plate is provided with a second avoidance structure, and the second avoidance structure is able to avoid an external driving component configured to drive the second pressurization plate to move in the first direction.

13. The battery pressurization device according to claim 12, wherein the first avoidance structure comprises a through hole; and/or
the second avoidance structure comprises a through hole.

14. A battery production system, comprising:
the battery pressurization device according to any one of claims 1 to 13; and
a driving component, configured to drive the first pressurization plate and the second pressurization plate to move toward each other in the first direction.

15. A battery production system, comprising:
the battery pressurization device according to any one of claims 2 to 9; and
a driving component, comprising a first driving member and a second driving member, wherein the first driving member is configured to drive the first pressurization plate and the second pressurization plate to move toward each other in the first direction, and the second driving member is configured to drive the first limiting member, so that the first limiting member is pressed against the first pressurization plate or pressure of the first limiting member on the first pressurization plate is released.
